# EUROPEAN PATENT APPLICATION

(11) **EP 4 485 299 A1**
(43) Date of publication of application: **01.01.2025**
(21) Application number: 23182674.4
(22) Date of filing: 30.06.2023
(51) Int. Cl.: G06Q 10/04, G06Q 50/06, H02J 3/00, H02J 3/32

(54) **A METHOD AND SYSTEM FOR THE PREDICTIVE MANAGEMENT OF A PLURALITY OF PHYSICAL ENERGY STORAGE ELEMENTS INSTALLED IN AN ELECTRICAL GRID**

(30) Priority: 29.06.2023 PT 2023118773
(71) Applicant: Instituto Superior de Engenharia do Porto, 4249-015 Porto (PT)
(72) Inventor: ALMEIDA DO VALE, Zita Maria, Porto (PT); OLIVEIRA GOMES, Luís Filipe de, Porto (PT); SILVA FARIA, Pedro Nuno da, Porto (PT)
(74) Representative: do Nascimento Gomes, Rui

(57) **Abstract**

The present disclosure is within the area of electrical energy grid management, especially referring to the management of several energy resources with focus on energy storage. Although there exist numerous solutions addressing energy management from energy providers which include storage, these solutions are missing a simple and reliable way to dynamically consider availability for the energy management, considering energy storage. The solution of the present disclosure further allows to test different energy availabilities and model a consumer interaction with the electricity grid. Moreover, an actuation in energy storage allows to fully automate a process on behalf of the consumer, namely in the context of demand response programs.

## Description

### FIELD OF THE INVENTION

The present disclosure is within the area of electrical energy grid management, especially referring to the management of several energy resources with focus on energy storage.

### PRIOR ART

Electrical energy storage nowadays are very flexible as one can use them to store energy when there are over production or low prices in the electricity market, or discharge energy when there is such energy need.

Although there exist numerous solutions addressing energy management from energy providers which include storage, these solutions are missing a simple and reliable way to dynamically consider availability for the energy management, considering energy storage. The solution of the present disclosure further allows to test different energy availabilities and model a consumer interaction with the electricity grid. Moreover, an actuation in energy storage allows to fully automate a process on behalf of the consumer, namely in the context of demand response programs.

### SUMMARY OF THE INVENTION

It is an object of the present disclosure a method for the predictive management of a plurality of physical energy storage elements installed in an electrical grid.

The method may comprise:
a) representing the physical energy storage elements in computational means, through the computational representation of each physical energy storage element by a computational agent from a plurality of computational agents,
b) simulating in computational means at least one simulated element of energy storage through the modelling of said simulated element, each simulated element of energy storage being computationally represented by a computational agent from a plurality of computational agents, and each simulated element corresponding to a data storage element which potentially will form an additional physical energy storage element to be installed in the electrical grid,
c) defining a hybrid energy storage assembly comprising a plurality of elements which consist of the computational agents representing physical energy storage elements and the computational agents representing the one or more simulated elements of energy storage,
d) determining a value of energy to be generated by a plurality of physical energy generation means during a first period of time and determining a load to be powered by the hybrid energy storage assembly during a second period of time,
e) based on the value of energy to be generated, the load and the first and second periods of time, determining if the elements of the hybrid energy storage assembly are to be charged with energy from the plurality of physical means of generating energy or discharged while powering the load.

### DESCRIPTION OF FIGURES

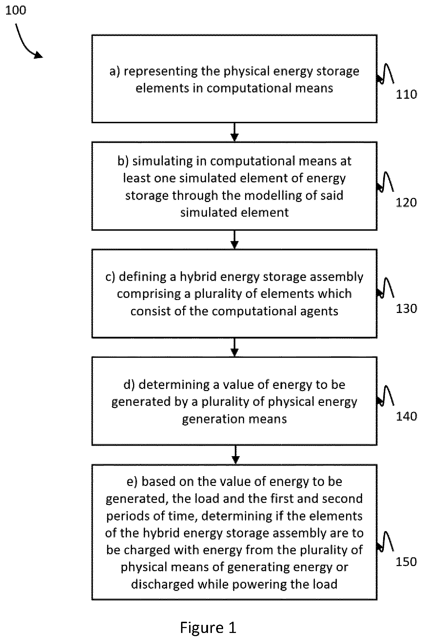

Figure 1 - a representation of an embodiment of the method (100) of the present disclosure, comprising the steps of a) representing the physical energy storage elements in computational means, through the computational representation of each physical energy storage element by a computational agent from a plurality of computational agents (110), b) simulating in computational means at least one simulated element of energy storage through the modelling of said simulated element, each simulated element of energy storage being computationally represented by a computational agent from a plurality of computational agents, and each simulated element corresponding to a data storage element which potentially will form an additional physical energy storage element to be installed in the electrical grid (120), c) defining a hybrid energy storage assembly comprising a plurality of elements which consist of the computational agents representing physical energy storage elements and the computational agents representing the one or more simulated elements of energy storage (130), d) determining a value of energy to be generated by a plurality of physical energy generation means during a first period of time and determining a load to be powered by the hybrid energy storage assembly during a second period of time (140), e) based on the value of energy to be generated, the load and the first and second periods of time, determining if the elements of the hybrid energy storage assembly are to be charged with energy from the plurality of physical means of generating energy or discharged while powering the load (150).

### DETAILED DESCRIPTION

The method of the present disclosure, by being based on computational agents, provides a multi-agent framework that aims to support and manage the development of multi-agent ecosystems in a simple way, in particular creating simulation environments and providing a feasible solution for a pilot deployment, more specifically in the context of electrical energy grids, with the integration of real devices, such as energy resources, loads, and/or Internet of Things (loT) devices and respective simulated devices. Moreover, it enables the integration of mathematical and machine learning models within each computational agent. As a further consequence, the computational agents of the method of the present disclosure do not represent a threat to the physical equipment when using data simulation.

The determination of step e) may comprise determining if a total capacity of the hybrid energy storage assembly, the total capacity being defined by the sum of the capacities of the physical and simulated energy storage elements, is such that allows the storage of the generated energy during the first period of time in the physical and simulated energy storage elements.

The method of the present disclosure combines energy storage with demand response to significantly reduce the size of conventional energy storage systems.

The determination of step e) may further comprise determining a portion of completeness of the capacity of each of the physical and simulated energy storage elements.

The method may further comprise defining sub-groups of physical and simulated energy storage elements part of the hybrid energy storage assembly, each sub-group comprising at least one physical or simulated energy storage element, the determination of step e) being applicable to each sub-group.

At least one sub-group may be charged with energy from the plurality of physical means of generating energy while another sub-group is discharged while powering the load, wherein such charging and discharging are simultaneous or take place in different moments.

The simulation of step c) may comprise emulating in means for emulation of one or more energy storage elements, the emulation comprising emulating the one or more simulated elements of energy storage resulting from the said simulation, the total capacity being defined by the sum of the capacities of the physical and simulated energy storage elements as emulated in the means for emulation of one or more energy storage elements.

Physical and simulated energy storage elements may be, respectively, physical and simulated electrical energy storage elements.

The computational agents may be computationally processed through multiprocessing and multithreading, thereby increasing simulation processing speed.

Steps a) to e) may be sequentially performed in real-time, whereby each step is performed immediately after the previous step.

The charge and discharge of step e) may be limited by a predefined maximum capacity and a predefined minimum capacity of the hybrid energy storage assembly, the predefined maximum capacity and the predefined minimum capacity being determined based on the capacities of the physical and simulated energy storage elements. It thereby reduces the chance of physical threats to the equipment.

Representing computationally each physical and simulated energy storage element by a computational agent from a plurality of computational agents comprises:
defining a total capacity, a maximum capacity, a minimum capacity, a rate of charge, a rate of discharge and/or a level of completeness of the total capacity for each energy storage element as represented in a computational agent, and
for a physical energy storage element, obtaining a real-time behaviour, and/or for a simulated energy storage element, simulating a real-time behaviour.

The method may comprise obtaining through communication means the total capacity, a maximum capacity, a minimum capacity, a rate of charge, a rate of discharge and/or a level of completeness of the total capacity of each physical energy storage element, the communication being optionally performed through cabled means, optionally through ModBus/TCP and/or Message Queuing Telemetry Transport (MQTT) communication protocols.

At least two of the physical energy storage elements may be installed in different locations.

The determination of step e) may be further based on a tariff associated with the value of energy to be generated by a plurality of physical energy generation means during a first period of time, the tariff variating during the first period of time. The method thereby enables the usage of dynamic prices in the electricity market.

The present disclosure may further comprise a computational system for the predictive management of a plurality of physical energy storage elements installed in an electrical grid, the system comprising computational means. Such computational means may be configured to implement the method of the present disclosure, in any of the previously described forms.

The present disclosure may further comprise a computer program product comprising executable instructions for performing the method of the present disclosure, in any of the previously described forms.

The present disclosure may further comprise a non-transitory storage media including program instructions executable to carry out the method of the present disclosure, in any of the previously described forms.

In various embodiments, the method, the system and/or elements thereof include components for performing at least some of the example features and capabilities of the described method, whether by means of hardware components (such as memory and/or processor), software, or any combination thereof.

In various embodiments, the system may comprise a microcontroller, with the ability to receive external data via inputs and provide triggering of outputs, based on configured rules and/or predefined programming.

An article for use with the method and/or the system such as a pre-recorded storage device or other similar computer-readable medium including program instructions recorded thereon, or a computer data signal carrying computer-readable program instructions may direct a device to facilitate implementation of the methods described herein. It is understood that such apparatus, articles of manufacture and computer data signals are also within the scope of the present disclosure.

A "computer-readable medium" is understood as any medium that can store instructions for use or execution by a computer or other computing device, including read-only memory (ROM), erasable programmable read-only memory (EPROM) or flash memory, random access memory (RAM), a portable floppy disk, a hard disk drive (HDD), a solid state storage device (e.g., NAND flash or synchronous dynamic RAM (SDRAM)), and/or an optical disc, such as a Compact Disc (CD), Digital Versatile Disc (DVD), or Blu-Ray ^{™} Disc.

As will be evident to a person skilled in the art, the present disclosure should not be limited to the embodiments described herein, with a number of changes being possible, which remain within the scope of this disclosure.

Of course, the preferred embodiments above described are combinable in the different possible forms, the repetition of all such combinations being herein avoided.

## Claims

1. A method for the predictive management of a plurality of physical energy storage elements installed in an electrical grid wherein it comprises:
a) representing the physical energy storage elements in computational means, through the computational representation of each physical energy storage element by a computational agent from a plurality of computational agents,
b) simulating in computational means at least one simulated element of energy storage through the modelling of said simulated element, each simulated element of energy storage being computationally represented by a computational agent from a plurality of computational agents, and each simulated element corresponding to a data storage element which potentially will form an additional physical energy storage element to be installed in the electrical grid,
c) defining a hybrid energy storage assembly comprising a plurality of elements which consist of the computational agents representing physical energy storage elements and the computational agents representing the one or more simulated elements of energy storage,
d) determining a value of energy to be generated by a plurality of physical energy generation means during a first period of time and determining a load to be powered by the hybrid energy storage assembly during a second period of time,
e) based on the value of energy to be generated, the load and the first and second periods of time, determining if the elements of the hybrid energy storage assembly are to be charged with energy from the plurality of physical means of generating energy or discharged while powering the load.

2. A method according to the previous claim wherein the determination of step e) comprises determining if a total capacity of the hybrid energy storage assembly, the total capacity being defined by the sum of the capacities of the physical and simulated energy storage elements, is such that allows the storage of the generated energy during the first period of time in the physical and simulated energy storage elements.

3. A method according to the previous claim wherein the determination of step e) further comprises determining a portion of completeness of the capacity of each of the physical and simulated energy storage elements.

4. A method according to any of the preceding claims wherein it further comprises defining sub-groups of physical and simulated energy storage elements part of the hybrid energy storage assembly, each sub-group comprising at least one physical or simulated energy storage element, the determination of step e) being applicable to each sub-group and, optionally,
wherein at least one sub-group is charged with energy from the plurality of physical means of generating energy while another sub-group is discharged while powering the load, wherein such charging and discharging are simultaneous or take place in different moments.

5. A method according to any of the claims 2-4 wherein the simulation of step c) comprises emulating in means for emulation of one or more energy storage elements, the emulation comprising emulating the one or more simulated elements of energy storage resulting from the said simulation, the total capacity being defined by the sum of the capacities of the physical and simulated energy storage elements as emulated in the means for emulation of one or more energy storage elements.

6. A method according to any of the preceding claims wherein physical and simulated energy storage elements are, respectively, physical and simulated electrical energy storage elements.

7. A method according to any of the preceding claims wherein the computational agents are computationally processed through multiprocessing and multithreading.

8. A method according to any of the preceding claims wherein steps a) to e) are sequentially performed in real-time, whereby each step is performed immediately after the previous step.

9. A method according to any of the preceding claims wherein the charge and discharge of step e) are limited by a predefined maximum capacity and a predefined minimum capacity of the hybrid energy storage assembly, the predefined maximum capacity and the predefined minimum capacity being determined based on the capacities of the physical and simulated energy storage elements.

10. A method according to any of the preceding claims wherein representing computationally each physical and simulated energy storage element by a computational agent from a plurality of computational agents comprises:
defining a total capacity, a maximum capacity, a minimum capacity, a rate of charge, a rate of discharge and/or a level of completeness of the total capacity for each energy storage element as represented in a computational agent, and
for a physical energy storage element, obtaining a real-time behaviour, and/or
for a simulated energy storage element, simulating a real-time behaviour.

11. A method according to the previous claim wherein it comprises obtaining through communication means the total capacity, a maximum capacity, a minimum capacity, a rate of charge, a rate of discharge and/or a level of completeness of the total capacity of each physical energy storage element, the communication being optionally performed through cabled means, optionally through ModBus/TCP and/or Message Queuing Telemetry Transport (MQTT) communication protocols.

12. A method according to any of the preceding claims wherein at least two of the physical energy storage elements are installed in different locations

13. A method according to any of the preceding claims wherein the determination of step e) is further based on a tariff associated with the value of energy to be generated by a plurality of physical energy generation means during a first period of time, the tariff variating during the first period of time.

14. A computational system for the predictive management of a plurality of physical energy storage elements installed in an electrical grid, the system comprising computational means configured to implement the method of any of the preceding claims.

15. A computer program product comprising executable instructions for performing the method of any of the claims 1-13, or a non-transitory storage media including program instructions executable to carry out the method of any of the claims 1-13.
